# EUROPEAN PATENT SPECIFICATION

(11) **EP 3 461 689 B1**
(45) Date of publication and mention of the grant of the patent: **16.12.2020**
(21) Application number: 17465552.2
(22) Date of filing: 27.09.2017
(51) Int. Cl.: B60R 11/00

(54) **CAMERA DEVICE AND METHOD FOR MOUNTING A CAMERA DEVICE FOR A MOTOR VEHICLE**
KAMERAVORRICHTUNG UND VERFAHREN ZUR MONTAGE EINER KAMERAVORRICHTUNG FÜR EIN KRAFTFAHRZEUG
DISPOSITIF DE CAMÉRA ET PROCÉDÉ DE MONTAGE D'UN DISPOSITIF DE CAMÉRA POUR UN VÉHICULE À MOTEUR

(43) Date of publication of application: 03.04.2019
(73) Proprietor: Continental Automotive GmbH, 30165 Hannover (DE)
(72) Inventor: Plamada, Alexandru, 307285 Mosnita Noua (RO); Barbano, Rodrigo Hernan, 89081 Ulm (DE)
(74) Representative: Reuter, Andreas

(56) References cited:
- EP-A1- 2 965 949
- EP-A1- 3 518 033
- DE-T5-112013 006 807
- US-A1- 2012 207 461
- US-A1- 2015 030 319

## Description

The invention relates to a camera device and a method for mounting a camera system for a motor vehicle.

Camera systems for motor vehicles are generally known. Camera systems are used, for example, to detect the surroundings of a motor vehicle as part of a driver assistance system. The image data of the vehicle's surroundings, which are recorded using the camera system, may be used to support a driver in the form of a traffic sign detection or lane detection, or as traffic control, for example.

The document US 2012/0207461 A1 describes an in-vehicle camera, which has a case and a sensor element. The camera is attached in a vehicle interior so that the sensor element is exposed at a top face of the case and the top face is opposed to a windshield or another window, wherein the top face has an angular shape bent at a ridge line passing through the top face, and the sensor element is positioned in the vicinity of the ridge line.

DE 11 2013 006 807 T5 discloses a camera unit comprising a bracket element and a camera element. The bracket element comprises a spring element, which is fixed to the bottom a base element. When combined, pins slide into respective hooks and spring elements of said bracket element are pressed against an upper area of camera element.

The object of the present invention is to achieve a further development of a camera device for a motor vehicle in the direction of safe and accurate mounting, and to specify a method for a fast and reliable mounting of the camera device.

This object is achieved by the features of the independent claims. Advantageous further developments of the invention are the subject matter of the subclaims, wherein combinations and further developments of individual advantageous features are also possible.

According to the invention, a camera device for a vehicle comprises a bracket element and a camera element, wherein on the bracket element a plurality of rest sections are disposed which are configured to receive at least one respective guiding pin and at least one respective locking pin arranged on a case of the camera element, wherein the bracket element further has at least one guiding spring element and at least one locking spring element, wherein the spring elements have respective elastic spring sections which are configured to preload the respective pins against the respective rest sections, during a mounting process of the camera device, in order to fix the position of the camera element within the bracket element.

The camera element is preferably used to supply image data, for example for driver assistance systems. This image data involves images, particularly of the surroundings of a vehicle, being recorded and processed, the processed image data being made available completely or in segments to the vehicle driver or to internal systems in the vehicle. In other words, the camera element is used for capturing an external vehicle environment. The bracket element as well as the case of the camera element are preferably manufactured by injection moulding. The spring elements are made of metal sheets which can be transformed partially or completely into spring elements according to the invention. Alternatively, the bracket element can be designed providing also spring elements, so that the bracket element and the spring elements are manufactured as a single unit consisting of at least two functional segments - one segment for receiving the case of the camera element, and at least one segment for pressing the case of the camera element against at least one rest section in order to fix the position of the case within the bracket element.

In a mounted state the spring elements, that means the at least one guiding spring element and the at least one locking spring element, are designed to press directly on the respective pins, that means the at least one respective guiding pin and the at least one respective locking pin arranged at the case of the camera element. In other words, the case is pressed against the bracket element by the respective spring elements in all directions, in order to mount the camera element at the bracket element and fix the position of the camera element. Furthermore, the spring elements can have a wavelike shape or can be formed as a flat bow in order to create a spring force, pushing the case against the respective rest sections. An advantage of pressing the case against the bracket element is that a rotation of the case around any camera axis (x, y, z) is eliminated. Another advantage is that the camera element is always secured in the same position within the bracket element.

Preferably, the case of the camera element has a first and a second end face, wherein the first end face have at least one guiding pin and least one locking pin and the second end face have at least one guiding pin and at least one locking pin for mounting the camera element to the bracket element. This preferred embodiment excludes the possibility of wrongly or rather incorrectly mounting the camera element within the bracket element.

According to a preferred embodiment, the bracket element has four rest sections, wherein two of the four rest sections have two respective guiding spring elements for receiving the respective guiding pins and two of the remaining rest sections have two respective locking spring elements for receiving the respective locking pins. This provides an improved fixation of the case within the bracket element.

Preferably, the camera element further comprises a sensor element that is exposed to a top face of the case. The sensor element is able to detect a vehicle's external environment. In the embodiment, the top face of the case is preferably opposed to a windshield or another window of the vehicle. The sensor element can be designed such that it provides the functions "High Light Assist", "Lane Departure Warning", "Traffic sign Recognition" and/or "Pedestrian Detection". Those functions assist the car driver and improve the vehicle safety. Additionally, the sensor element can provide a lens or imaging system for focusing beams for example onto an image sensor.

The invention includes the teaching that a recess is arranged on a bottom side of the bracket element for at least partially receiving the case of the camera element. The recess has an inner contour corresponding to the outer contour of the case in order to keep the position of the camera element within the case. The recess can preferably be formed such that an incorrect mounting of the camera element to the bracket element is eliminated. Therefore, the bracket element can provide structures which correspond to the structure of the case avoiding the risk of the camer device being mounted in more than one predetermined position. In other words, the camera element can only be mounted in one specific way. The top side of the bracket element is configured to come into contact with the windshield or another window of the vehicle.

The bracket element comprises at least one retaining element for each spring element in order to fix the spring elements in position within the recess of the bracket element. The advantage is that the position of the case is secured by the spring elements.

In particular, the camera device according to the invention is used in a motor vehicle. A motor vehicle provides certain equipment for carriage of goods and/or passengers by road and also has a windshield and/or at least one other window, wherein the camera device can be arranged on a windshield and/or another window of the motor vehicle. For example, a motor vehicle can be a passenger vehicle or a commercial vehicle, such as a truck.

According to the inventive method for mounting a camera system for a vehicle, the case of the camera element is pushed in both a parallel direction and a perpendicular direction towards the bracket element, wherein the pins of the case slide over the respective elastic spring sections and a respective sliding surface of the rest sections towards an undercut of the respective rest sections, and the case is preloaded against the rest sections of the bracket element by the spring elements in order to fix the position of the camera element within the bracket element.

The parallel direction is oriented parallel to a top face of the bracket element, which can be opposed to a windshield of the vehicle, wherein the perpendicular direction is oriented perpendicular to the top face of the bracket element. In other words, the camera element is mounted at the bracket element by an oscillation movement of the case.

### Brief description of the drawings

The features and advantages of the invention will be appreciated and best understood by reference to the description that follows when taken in conjunction with the accompanying drawings in the several figures of which like reference numerals identify like elements and in which:
- Fig. 1: is a sectional side view of a vehicle with a camera device according to an embodiment;
- Fig. 2: is a perspective view of a bracket element of the camera system;
- Fig. 3: is a perspective view of a camera element of the camera system according to an embodiment;
- Fig. 4a: is a sectional perspective view of a locking spring element;
- Fig. 4b: is a sectional perspective view of a guiding spring element;
- Fig. 5a: is a cross-sectional view of the camera system at the start of a mounting process; and
- Fig. 5b: is a cross-sectional view of the camera system at the end of the mounting process.

### Detailed description of the preferred embodiment

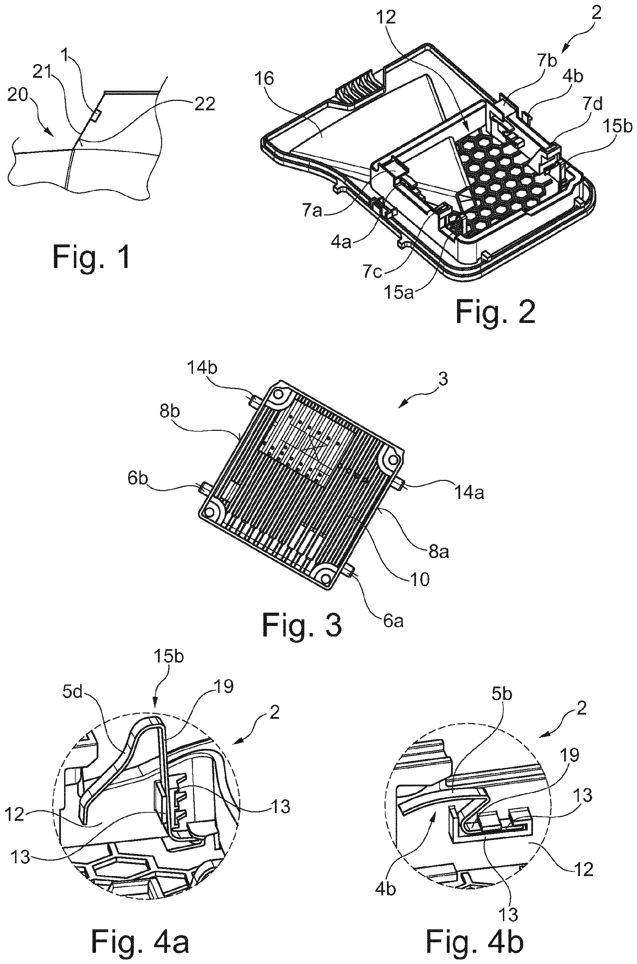

Fig. 1 shows a sectional side view of a vehicle 21 with a camera device 1 according to a preferred embodiment. The camera device 1 is arranged on an inner surface 22 of a windshield 21. The camera device has the ability to detect an external vehicle environment. Alternatively the camera device 1 can also be arranged on another window, for example on one or more side windows and/or on a rear window of the vehicle 20. The camera device 1 comprises a bracket element 2 (shown in Fig. 2) and a camera element 3 (shown in Fig. 3) .

Fig. 2 shows a perspective view of the bracket element 2 of the camera system 1 according to Fig. 1. The bracket element 2 has four rest sections 7a, 7b, 7c, 7d, wherein two rest sections 7a, 7b of the bracket element 3 have two respective guiding spring elements 4a, 4b and two rest sections 7c, 7d having two respective locking spring elements 15a, 15b. The rest sections 7a, 7b, 7c, 7d with the spring elements 4a, 4b, 15a, 15b are arranged at two opposite walls of a recess 12, which is arranged on a bottom side 16 of the bracket element 2 for partially receiving the case 10 of the camera element 3 (Fig. 3).

The camera element 3 shown in Fig. 3 has two guiding pins 6a, 6b and two locking pins 14a, 14b arranged on a case 10 of the camera element 3. The case 10 has a first and a second end face 8a, 8b, wherein the first end face 8a has one guiding pin 6a and one locking pin 14a and the second end face 8b has also one guiding pin 6b and one locking pin 14b. The two guiding pins 6a, 6b are received by the two guiding spring elements 4a, 4b and the two locking pins 14a, 14b are received by the two locking spring elements 15a, 15b for mounting the camera element 3 to the bracket element 2. The camera element 3 further comprises a sensor element 9 which is exposed to a top face 11 of the case 10. The sensor element 9 is able to detect a vehicle's external environment. In the embodiment the top face of the case is preferably opposed to the windshield 21 shown in Fig. 1.

Fig. 4a shows the locking spring element 15b arranged within the recess 12 of the bracket element 2. The locking spring element 15b has an elastic spring section 5d and a mounting section 19. In this embodiment, the elastic spring section 5d has a wavelike form in order to preload the locking pin 14b during the mounting process against the rest section 7d. The mounting section 19 of the locking spring element 15b is formed such that two retaining elements 13 are able to keep the position of the locking spring element 15b within the recess 12 of the bracket element 2. The other locking spring element 15a arranged at the bracket element 2 is formed in accordance with the locking spring element 15b shown in Fig. 4a, wherein the locking spring element 15a is arranged on the opposite side of the recess 12.

Fig. 4b shows the guiding spring element 4b arranged within the recess 12 of the bracket element 2. The guiding spring element 4b has an elastic spring section 5b and a mounting section 19. In this embodiment the elastic spring section 5b is formed as a flat bow in order to preload the locking pin 14b during the mounting process against the rest section 7b. The mounting section 19 of the guiding spring element 4b is formed such that two retaining elements 13 are able to keep the position of the guiding spring element 4b within the recess 12 of the bracket element 2. The other guiding spring element 4a arranged at the bracket element 2 is formed in accordance with the guiding spring element 4b shown in Fig. 4b, wherein the guiding spring element 4a is arranged on the opposite side of the recess 12.

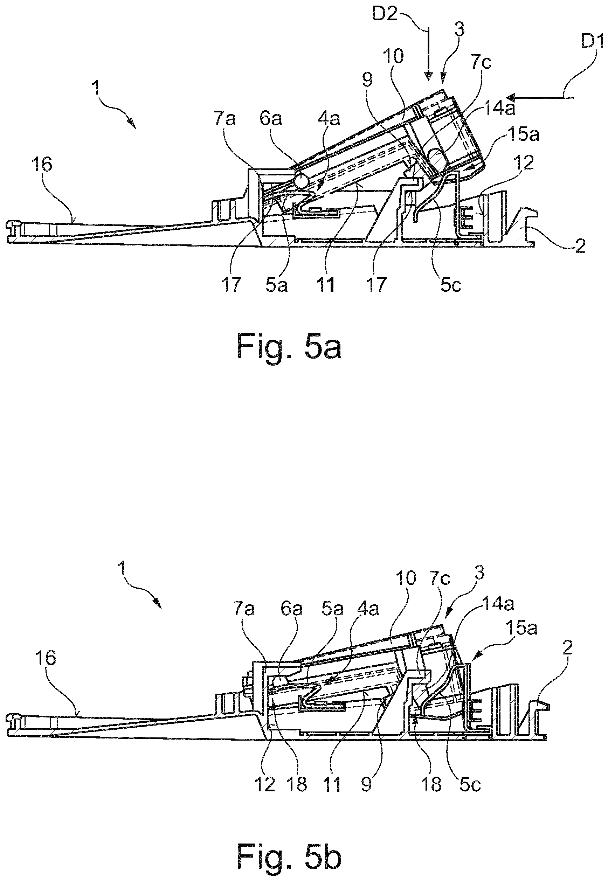

The Figs. 5a and 5b explain the method of attaching the camera element 3 to the bracket element 2. The opposite side of the case 10 or rather the bracket element 2 is neither illustrated in Fig. 5a nor Fig. 5b. The elements of the case 10 and bracket element 2 are formed inversely to the shown design.

According to Fig. 5a, in a first step, the guiding pin 6a of the case 10 is positioned between an elastic spring section 5a of the guiding spring element 4a and a sliding surface 17 of the rest section 7a of the bracket element 2. In accordance with that, the guiding pin 6b, arranged on the opposite side of the case 10 is positioned between an elastic spring section 5b of the guiding spring element 4b and a sliding surface 17 of the rest section 7b of the bracket element 2. Also, the locking pin 14a of the case 10 is positioned between an elastic spring section 5c of the locking spring element 15a and a sliding surface 17 of the rest section 7c of the bracket element 2.

In accordance with that, the guiding pin 6b, arranged on the opposite side of the case 10 is positioned between an elastic spring section 5b of the guiding spring element 4b and a sliding surface 17 of the rest section 7b of the bracket element 2. Also, the locking pin 14b of the case 10 is positioned between an elastic spring section 5d of the locking spring element 15b and a sliding surface 17 of the rest section 7d of the bracket element 2.

In a second step, the case 10 of the camera element 3 is pushed in both a parallel direction D1 and a perpendicular direction D2 towards the bracket element 2. In other words the case 10 is moved in an oscillation movement in order to mount the camera element 3 towards the bracket element 2. The pins 6a, 6b, 14a, 14b of the case 10 slide over the respective elastic spring sections 5a, 5b, 5c, 5d of the spring elements 4a, 4b, 15a, 15b and the respective sliding surface 17 of the rest sections 7a, 7b, 7c, 7d towards an undercut 18, which is shown in Fig. 5b, of the respective rest sections 7a, 7b, 7c, 7d. In other words, by pushing the case 10 towards the rest sections 7a, 7b, 7c, 7d the elastic spring sections 5a, 5b, 5c, 5d are being transversely distorted in order to lead the pins 6a, 6b, 14a, 14b towards the respective undercut 18 of the rest sections 7a, 7b, 7c, 7d.

At the time, when the pins 6a, 6b, 14a, 14b reach the respective undercut 18 or rather the end surface of the rest sections 7a, 7b, 7c, 7d, the pins 6a, 6b, 14a, 14b of the case 10 are preloaded against the rest sections 7a, 7b, 7c, 7d of the bracket element 2 by the spring elements 4a, 4b, 15a, 15b in order to fix the position of the camera element 3 within the bracket element 2. This embodiment eliminates a rotation of the camera element 3 within the bracket element 2 and prevents the camera element 3 from being attached to the bracket element 3 incorrectly. As mentioned before, the pins 6b, 14b of the case 10 as well as the spring elements 4b, 15b with the spring sections 5b, 5d are located on the opposite side of the case 10 or rather the bracket element 2 shown here and are not illustrated in Fig. 5a and Fig. 5b.

### List of reference symbols

- 1: Camera device
- 2: Bracket element
- 3: Camera element
- 4a, 4b: Guiding spring element
- 5a, 5b, 5c, 5d: Spring section
- 6a, 6b: Guiding pin
- 7a, 7b, 7c, 7d: Rest section
- 8a, 8b: End face
- 9: Sensor element
- 10: Case
- 11: Top face
- 12: Recess
- 13: Retaining element
- 14a, 14b: Locking pin
- 15a, 15b: Locking spring element
- 16: Bottom side
- 17: Sliding surface
- 18: Undercut
- 19: Mounting sections
- 20: Vehicle
- 21: Windshield
- 22: Inner surface

- D1: Parallel direction
- D2: Perpendicular direction

## Claims

1. A camera device (1) for a vehicle, comprising a bracket element (2) and a camera element (3), wherein on the bracket element (2) a plurality of rest sections (7a, 7b, 7c, 7d) are disposed, which are configured to receive at least one respective guiding pin (6a, 6b) and at least one respective locking pin (14a, 14b) arranged on a case (10) of the camera element (3),
wherein the bracket element (2) further comprises at least one guiding spring element (4a, 4b) and at least one locking spring element (15a, 15b), wherein the spring elements (4a, 4b, 15a, 15b) comprise respective elastic spring sections (5a, 5b, 5c, 5d) which are configured to press directly on the respective pins (6a, 6b, 14a, 14b) against the respective rest sections (7a, 7b, 7c, 7d) during a mounting process of the camera device (1) in order to fix the position of the camera element (3) within the bracket element (2), wherein a recess (12) is arranged on a bottom side (16) of the bracket element (2) for at least partially receiving the case (10) of the camera element (3) and wherein the bracket element (2) comprises at least one retaining element (13) for each spring element (4a, 4b, 15a, 15b) in order to fix the spring elements (4a, 4b, 15a, 15b) in position within the recess (12) of the bracket element (2), wherein the spring elements (4a, 4b, 15a, 15b) each have an elastic spring section (5d, 5b) and a mounting section (19), **characterized in that** the mounting section (19) is formed such that two retaining elements (13) are able to keep the position of the spring element (4a, 4b, 15a, 15b) within the recess (12).

2. The camera device (1) according to claim 1, wherein the case (10) of the camera element (2) has a first and a second end face (8a, 8b), wherein at least one guiding pin (6a) and at least one locking pin (14a) are formed on the first end face (8a) and at least one guiding pin (6b) and at least one locking pin (14b) are formed on the second end face (8b) for mounting the camera element (3) to the bracket element (2).

3. The camera device (1) according to claim 2, wherein the bracket element (2) comprises four rest sections (7a, 7b, 7c, 7d), wherein two of the four rest sections (7a, 7b) have two respective guiding spring elements (4a, 4b) for receiving the respective guiding pins (6a, 6b) and the remaining two rest sections (7c, 7d) have two respective locking spring elements (15a, 15b) for receiving the respective locking pins (14a, 14b).

4. The camera device (1) according to any of the preceding claims, wherein the camera element (3) further comprises a sensor element (9) which is exposed to a top face (11) of the case (10).

5. A vehicle, comprising a camera device (1) with a bracket element (2) and a camera element (3), according to one of the claims 1 to 6, for detecting the external environment of the vehicle.

6. A method for mounting a camera system (1) for a vehicle, wherein the camera system (1) comprises a bracket element (2) and a camera element (3), wherein on the bracket element (2) a plurality of rest sections (7a, 7b, 7c, 7d) are disposed, wherein at least one guiding spring element (4a, 4b) and at least one locking spring element (15a, 15b) for receiving and preloading a case (10) of the camera element (3) are arranged in the plurality of rest sections (7a, 7b, 7c, 7d), wherein the bracket element (2) comprises at least one retaining element (13) for each spring element (4a, 4b, 15a, 15b) in order to fix the spring elements (4a, 4b, a 15a, 15b) in position within the recess (12) of the bracket element (2), wherein recess (12) is arranged on a bottom side (16) of the bracket element (2) for at least partially receiving the case (10) of the camera element (3) and wherein the spring elements (4a, 4b, 15a, 15b) each have an elastic spring section (5d, 5b) and a mounting section (19), comprising the following steps:
- positioning of at least one guiding pin (6a, 6b) of the case (10) between a respective elastic spring section (5a, 5b) of the respective guiding spring element (4a, 4b) and the respective rest section (7a, 7b) of the bracket element (2);
- positioning of at least one locking pin (14a, 14b) of the case (10) between a respective elastic spring section (5c, 5d) of the respective locking spring element (15a, 15b) and the respective rest section (7c, 7d) of the bracket element (2);
- pushing the case (10) of the camera element (3) in a parallel direction (D1) and a perpendicular direction (D2) towards the bracket element (2), wherein the pins (6a, 6b, 14a, 14b) of the case (10) slide over the respective elastic spring sections (5a, 5b, 5c, 5d) and a respective sliding surface (17) of the rest sections (7a, 7b, 7c, 7d) towards an undercut (18) of the respective rest sections (7a, 7b, 7c, 7d); and
- preloading the case (10) against the rest sections (7a, 7b, 7c, 7d) of the bracket element (2) by pressing the spring elements (4a, 4b, 15a, 15b) directly on the respective pins (6a, 6b, 14a, 14b) in order to fix the position of the camera element (3) within the bracket element (2), **characterized in that** the mounting section (19) is formed such that two retaining elements (13) are able to keep the position of the spring element (4a, 4b, 15a, 15b) within the recess (12).

## Patentansprüche

1. Kameravorrichtung (1) für ein Fahrzeug, die ein Halterungselement (2) und ein Kameraelement (3) umfasst, wobei an dem Halterungselement (2) eine Mehrzahl von Auflageabschnitten (7a, 7b, 7c, 7d) angeordnet ist, die dazu ausgestaltet sind, wenigstens einen entsprechenden Führungsstift (6a, 6b) und wenigstens einen entsprechenden Verriegelungsstift (14a, 14b), die an einem Gehäuse (10) des Kameraelements (3) angeordnet sind, aufzunehmen, wobei das Halterungselement (2) ferner wenigstens ein Führungsfederelement (4a, 4b) und wenigstens ein Verriegelungsfederelement (15a, 15b) umfasst, wobei die Federelemente (4a, 4b, 15a, 15b) entsprechende elastische Federabschnitte (5a, 5b, 5c, 5d) umfassen, die dazu ausgestaltet sind, während eines Montageprozesses der Kameravorrichtung (1) direkt auf die entsprechenden Stifte (6a, 6b, 14a, 14b), gegen die entsprechenden Auflageabschnitte (7a, 7b, 7c, 7d), zu drücken, um die Position des Kameraelements (3) innerhalb des Halterungselements (2) zu fixieren, wobei - zum wenigstens teilweisen Aufnehmen des Gehäuses (10) des Kameraelements (3) - eine Aussparung (12) an einer Unterseite (16) des Halterungselements (2) angeordnet ist und wobei das Halterungselement (2) wenigstens ein Halteelement (13) für jedes Federelement (4a, 4b, 15a, 15b) umfasst, um die Federelemente (4a, 4b, 15a, 15b) innerhalb der Aussparung (12) des Halterungselements (2) in ihrer Position zu fixieren, wobei die Federelemente (4a, 4b, 15a, 15b) jeweils einen elastischen Federabschnitt (5d, 5b) und einen Montageabschnitt (19) aufweisen, **dadurch gekennzeichnet, dass**
der Montageabschnitt (19) derart ausgebildet ist, dass zwei Halteelemente (13) in der Lage sind, die Position des Federelements (4a, 4b, 15a, 15b) innerhalb der Aussparung (12) aufrechtzuerhalten.

2. Kameravorrichtung (1) nach Anspruch 1, wobei das Gehäuse (10) des Kameraelements (2) eine erste und eine zweite Stirnfläche (8a, 8b) aufweist, wobei - zum Montieren des Kameraelements (3) an dem Halterungselement (2) - wenigstens ein Führungsstift (6a) und wenigstens ein Verriegelungsstift (14a) an der ersten Stirnfläche (8a) ausgebildet sind und wenigstens ein Führungsstift (6b) und wenigstens ein Verriegelungsstift (14b) an der zweiten Stirnfläche (8b) ausgebildet sind.

3. Kameravorrichtung (1) nach Anspruch 2, wobei das Halterungselement (2) vier Auflageabschnitte (7a, 7b, 7c, 7d) umfasst, wobei zwei der vier Auflageabschnitte (7a, 7b) zwei entsprechende Führungsfederelemente (4a, 4b) zum Aufnehmen der entsprechenden Führungsstifte (6a, 6b) aufweisen und die verbleibenden zwei Auflageabschnitte (7c, 7d) zwei entsprechende Verriegelungsfederelemente (15a, 15b) zum Aufnehmen der entsprechenden Verriegelungsstifte (14a, 14b) aufweisen.

4. Kameravorrichtung (1) nach einem der vorangehenden Ansprüche, wobei das Kameraelement (3) ferner ein Sensorelement (9) umfasst, das zu einer Oberseitenfläche (11) des Gehäuses (10) hin freiliegt.

5. Fahrzeug, das eine Kameravorrichtung (1) mit einem Halterungselement (2) und einem Kameraelement (3) nach einem der Ansprüche 1 bis 6 zum Erfassen der äußeren Umgebung des Fahrzeugs umfasst.

6. Verfahren zur Montage eines Kamerasystems (1) für ein Fahrzeug, wobei das Kamerasystem (1) ein Halterungselement (2) und ein Kameraelement (3) umfasst, wobei an dem Halterungselement (2) eine Mehrzahl von Auflageabschnitten (7a, 7b, 7c, 7d) angeordnet ist, wobei wenigstens ein Führungsfederelement (4a, 4b) und wenigstens ein Verriegelungsfederelement (15a, 15b) zum Aufnehmen und Vorspannen eines Gehäuses (10) des Kameraelements (3) in der Mehrzahl von Auflageabschnitten (7a, 7b, 7c, 7d) angeordnet sind, wobei das Halterungselement (2) wenigstens ein Halteelement (13) für jedes Federelement (4a, 4b, 15a, 15b) umfasst, um die Federelemente (4a, 4b, 15a, 15b) in ihrer Position innerhalb der Aussparung (12) des Halterungselements (2) zu fixieren, wobei - zum wenigstens teilweisen Aufnehmen des Gehäuses (10) des Kameraelements (3) - eine Aussparung (12) an einer Unterseite (16) des Halterungselements (2) angeordnet ist und wobei die Federelemente (4a, 4b, 15a, 15b) jeweils einen elastischen Federabschnitt (5d, 5b) und einen Montageabschnitt (19) aufweisen,
folgende Schritte umfassend:
- Anordnen wenigstens eines Führungsstiftes (6a, 6b) des Gehäuses (10) zwischen einem entsprechenden elastischen Federabschnitt (5a, 5b) des entsprechenden Führungsfederelements (4a, 4b) und dem entsprechenden Auflageabschnitt (7a, 7b) des Halterungselements (2);
- Anordnen wenigstens eines Verriegelungsstiftes (14a, 14b) des Gehäuses (10) zwischen einem entsprechenden elastischen Federabschnitt (5c, 5d) des entsprechenden Verriegelungsfederelements (15a, 15b) und dem entsprechenden Auflageabschnitt (7c, 7d) des Halterungselements (2);
- Schieben des Gehäuses (10) des Kameraelements (3) in einer parallelen Richtung (D1) und einer senkrechten Richtung (D2) hin zu dem Halterungselement (2), wobei die Stifte (6a, 6b, 14a, 14b) des Gehäuses (10) über die entsprechenden elastischen Federabschnitte (5a, 5b, 5c, 5d) und eine entsprechende Gleitfläche (17) der Auflageabschnitte (7a, 7b, 7c, 7d) hin zu einer Unterschneidung (18) der entsprechenden Auflageabschnitte (7a, 7b, 7c, 7d) gleiten; und
- Vorspannen des Gehäuses (10) gegen die Auflageabschnitte (7a, 7b, 7c, 7d) des Halterungselements (2) durch Drücken der Federelemente (4a, 4b, 15a, 15b) direkt auf die entsprechenden Stifte (6a, 6b, 14a, 14b), um die Position des Kameraelements (3) innerhalb des Halterungselements (2) zu fixieren, **dadurch gekennzeichnet, dass** der Montageabschnitt (19) derart ausgebildet ist, dass zwei Halteelemente (13) in der Lage sind, die Position des Federelements (4a, 4b, 15a, 15b) innerhalb der Aussparung (12) aufrechtzuerhalten.

## Revendications

1. Dispositif de caméra (1) pour un véhicule, comprenant un élément formant support (2) et un élément formant caméra (3), une pluralité de parties d'appui (7a, 7b, 7c, 7d), qui sont conçues pour recevoir au moins une broche de guidage (6a, 6b) respective et au moins une broche de verrouillage (14a, 14b) respective agencées sur un boîtier (10) de l'élément formant caméra (3), étant disposées sur l'élément formant support (2),
l'élément formant support (2) comprenant en outre au moins un élément formant ressort de guidage (4a, 4b) et au moins un élément formant ressort de verrouillage (15a, 15b), les éléments formant ressort (4a, 4b, 15a, 15b) comprenant des parties de ressort élastiques (5a, 5b, 5c, 5d) respectives, qui sont conçues pour appuyer directement sur les broches (6a, 6b, 14a, 14b) respectives contre les parties d'appui (7a, 7b, 7c, 7d) respectives pendant un processus de montage du dispositif de caméra (1) afin de fixer la position de l'élément formant caméra (3) dans l'élément formant support (2), un évidement étant agencé sur un côté fond (16) de l'élément formant support (2) pour recevoir au moins en partie le boîtier (10) de l'élément formant caméra (3) et l'élément formant support (2) comprenant au moins un élément de retenue (13) pour chaque élément formant ressort (4a, 4b, 15a, 15b) afin de fixer les éléments formant ressort (4a, 4b, 15a, 15b) en place dans l'évidement (12) de l'élément formant support (2), les éléments formant ressort (4a, 4b, 15a, 15b) présentant chacun une partie de ressort élastique (5d, 5b) et une partie de montage (19), **caractérisé en ce que** la partie de montage (19) est formée de telle sorte que deux éléments de retenue (13) peuvent maintenir la position de l'élément formant ressort (4a, 4b, 15a, 15b) dans l'évidement (12).

2. Dispositif de caméra (1) selon la revendication 1, dans lequel le boîtier (10) de l'élément formant caméra (2) présente une première et une seconde face frontale (8a, 8b), au moins une broche de guidage (6a) et au moins une broche de verrouillage (14a) étant formées sur la première face frontale (8a) et au moins une broche de guidage (6b) et au moins une broche de verrouillage (14b) étant formées sur la seconde face frontale (8b) pour monter l'élément formant caméra (3) sur l'élément formant support (2).

3. Dispositif de caméra (1) selon la revendication 2, dans lequel l'élément formant support (2) comprend quatre parties d'appui (7a, 7b, 7c, 7d), deux des quatre parties d'appui (7a, 7b) présentant deux éléments formant ressort de guidage (4a, 4b) respectifs pour recevoir les broches de guidage (6a, 6b) respectives et les deux parties d'appui (7c, 7d) restantes présentant deux éléments formant ressort de verrouillage (15a, 15b) respectifs pour recevoir les broches de verrouillage (14a, 14b) respectives.

4. Dispositif de caméra (1) selon l'une quelconque des revendications précédentes, dans lequel l'élément formant caméra (3) comprend en outre un élément détecteur (9) qui est exposé sur une face supérieure (11) du boîtier (10).

5. Véhicule, comprenant un dispositif de caméra (1) doté d'un élément formant support (2) et d'un élément formant caméra (3), selon une des revendications 1 à 6, pour détecter l'environnement extérieur du véhicule.

6. Procédé de montage d'un système de caméra (1) pour un véhicule, dans lequel le système de caméra (1) comprend un élément formant support (2) et un élément formant caméra (3), une pluralité de parties d'appui (7a, 7b, 7c, 7d) étant disposées sur l'élément formant support (2), au moins un élément formant ressort de guidage (4a, 4b) et au moins un élément formant ressort de verrouillage (15a, 15b) pour recevoir et mettre en précharge un boîtier (10) de l'élément formant caméra (3) étant agencés dans la pluralité de parties d'appui (7a, 7b, 7c, 7d), l'élément formant support (2) comprenant au moins un élément de retenue (13) pour chaque élément formant ressort (4a, 4b, 15a, 15b) afin de fixer les éléments formant ressort (4a, 4b, 15a, 15b) en place dans l'évidement (12) de l'élément formant support (2), un évidement (12) étant agencé sur un côté fond (16) de l'élément formant support (2) pour recevoir au moins en partie le boîtier (10) de l'élément formant caméra (3) et les éléments formant ressort (4a, 4b, 15a, 15b) présentant chacun une partie de ressort élastique (5d, 5b) et une partie de montage (19),
comprenant les étapes suivantes :
- positionnement d'au moins une broche de guidage (6a, 6b) du boîtier (10) entre une partie de ressort élastique (5a, 5b) respective de l'élément formant ressort de guidage (4a, 4b) respectif et la partie d'appui (7a, 7b) respective de l'élément formant support (2) ;
- positionnement d'au moins une broche de verrouillage (14a, 14b) du boîtier (10) entre une partie de ressort élastique (5c, 5d) respective de l'élément formant ressort de verrouillage (15a, 15b) respectif et la partie d'appui (7c, 7d) respective de l'élément formant support (2) ;
- poussée du boîtier (10) de l'élément formant caméra (3) dans une direction parallèle (D1) et une direction perpendiculaire (D2) vers l'élément formant support (2), les broches (6a, 6b, 14a, 14b) du boîtier (10) glissant sur les parties de ressort élastiques (5a, 5b, 5c, 5d) respectives et une surface de glissement (17) respective des parties d'appui (7a, 7b, 7c, 7d) vers une contre-dépouille (18) des parties d'appui (7a, 7b, 7c, 7d) respectives ; et
- mise en précharge du boîtier (10) contre les parties d'appui (7a, 7b, 7c, 7d) de l'élément formant support (2) en appuyant les éléments formant ressort (4a, 4b, 15a, 15b) directement sur les broches (6a, 6b, 14a, 14b) respectives afin de fixer la position de l'élément formant caméra (3) dans l'élément formant support (2), **caractérisé en ce que** la partie de montage (19) est formée de telle sorte que deux éléments de retenue (13) peuvent maintenir la position de l'élément formant ressort (4a, 4b, 15a, 15b) dans l'évidement (12).
